# EUROPEAN PATENT APPLICATION

(11) **EP 1 686 299 A1**
(43) Date of publication of application: **02.08.2006**
(21) Application number: 06000190.6
(22) Date of filing: 05.01.2006
(51) Int. Cl.: F16K 15/04, F16K 17/04

(54) **Pressure actuated valve**

(30) Priority: 28.01.2005 JP 2005020523
(71) Applicant: AISIN SEIKI KABUSHIKI KAISHA, Kariya-shi, Aichi-ken 448-8650 (JP)
(72) Inventor: Ikegawa, Atsutoshi, Kariya-shi Aichi-ken 448-8650 (JP)
(74) Representative: Kramer - Barske - Schmidtchen

(57) **Abstract**

A pressure actuated valve (11) includes a valve main body (21), an inlet opening (28) provided at the valve main body, an outlet opening (26) provided at the valve main body, a valve chamber (22) formed in the valve main body between the inlet opening and the outlet opening and operatively connected thereto, a valve seat (23) provided at an end portion of the valve chamber at the inlet opening side, a spherical valve (24) detachably provided in the valve chamber at the valve seat, a biasing member (25) biasing the spherical valve in a direction in which the spherical valve is pressed toward the valve seat, and a fluid pressure biasing mechanism (23a) provided at the valve main body for biasing the spherical valve in a direction perpendicular to a fluid flow direction by means of the fluid pressure in the valve chamber while opening of the spherical valve.

## Description

### FIELD OF THE INVENTION

This invention relates to a pressure actuated valve which allows flow of fluid in a first direction when a spherical valve, which is arranged to face a valve seat opening formed at a fluid passage, opens the valve seat opening, and prevents the flow of the fluid in a second direction when the spherical valve closes the valve seat opening.

### BACKGROUND

Conventionally, a pressure actuated valve includes a spherical valve, which is biased toward a valve seat by means of a coil spring by a predetermined force. In a condition where a pressure of fluid toward an inlet opening becomes larger degree than a biasing force of the coil spring, the pressure actuated valve is opened and the fluid is flowed into a valve chamber from the inlet opening. Then the fluid is supplied to a desirable portion from an outlet opening. In a condition where the pressure actuated valve is opened, the spherical valve comes into a floating state. In such circumstances, because of possible deviations in shape of the valve seat during production, the pressure actuated valve is oscillated caused by the flow of the fluid, and a liquid column of whole piping is oscillated because of an oscillation of the pressure actuated valve, and thus a noise may occasionally be generated. In order to prevent such noise, in a known pressure actuated valve disclosed in JPH08-006575B (see Fig. 1), a central line of the valve seat and a central axis line of the coil spring are shifted, and the spherical valve is biased by means of the coil spring toward the valve seat with an angle relative to the central line thereof. According to the disclosed pressure actuated valve, because the spherical valve is biased toward the valve seat or is biased toward one side of a peripheral wall leading from the valve seat by means of the biasing force of the coil spring, the spherical valve does not come into the floating state while opening of the valve. Therefore an oscillation of the fluid in the piping is not induced, and generation of the noise can be prevented.

However, because the spherical valve constantly receives the force from an angled direction while opening of the valve, the spherical valve unevenly contacts with the valve seat, and the pressure actuated valve may occasionally fail to ensure an optimal sealability.

A need thus exists for a pressure actuated valve, which prevents the generation of the noise because of the induced oscillation of the fluid in the piping, and prevents the spherical valve from unevenly contacting with the valve seat with a simple structure.

### SUMMARY OF THE INVENTION

According to an aspect of the present invention, a pressure actuated valve includes a valve main body, an inlet opening provided at the valve main body, an outlet opening provided at the valve main body, a valve chamber formed in the valve main body between the inlet opening and the outlet opening and operatively connected thereto, a valve seat provided at an end portion of the valve chamber at the inlet opening side, a spherical valve detachably provided in the valve chamber at the valve seat, the spherical valve being separated from the valve seat for opening the valve in response to a fluid pressure at the inlet opening, a biasing member biasing the spherical valve in a direction in which the spherical valve is pressed toward the valve seat, and a fluid pressure biasing means provided at the valve main body for biasing the spherical valve in a direction perpendicular to a fluid flow direction by means of the fluid pressure in the valve chamber while opening of the spherical valve.

According to the present invention, because the fluid pressure in the valve chamber biases the spherical valve in a direction perpendicular to a fluid flow direction while opening of the spherical valve, the spherical valve does not come into the floating state while opening of the valve. Therefore, the oscillation of the fluid in the piping is not induced, and generation of the noise can thereby be prevented.

According to the present invention, the direction of the biasing force of the biasing member toward the spherical valve is not necessarily be angled relative to the central line of the valve seat. Therefore, the spherical valve constantly receives the force from the direction perpendicular to the seal surface, and the spherical valve does not unevenly contact with the valve seat. Accordingly, the optimal sealability can be ensured.

### BRIEF DESCRIPTION OF THE DRAWINGS

The foregoing and additional features and characteristics of the present invention will become more apparent from the following detailed description considered with reference to the accompanying drawings, wherein:

Fig. 1 is a sectional view of a pressure actuated valve according to an embodiment of the present invention.

Fig. 2 is a sectional view of an engine.

Fig. 3 is a diagram for explaining an engine lubrication system of an automobile.

Fig. 4 is a view of a recessed portion 23a illustrated in Fig. 1, viewed from B direction.

Fig. 5 is a sectional view taken along line V-V of Fig. 1.

Fig. 6 is a sectional view taken along line VI-VI of Fig. 1 in a condition where two recessed portions 23a are provided.

Fig. 7 is a local sectional view of the pressure actuated valve according to the embodiment of the present invention in a condition where the valve is opened.

### DETAILED DESCRIPTION

An embodiment of the present invention applied to an engine lubrication system of an automobile will be explained hereinbelow.

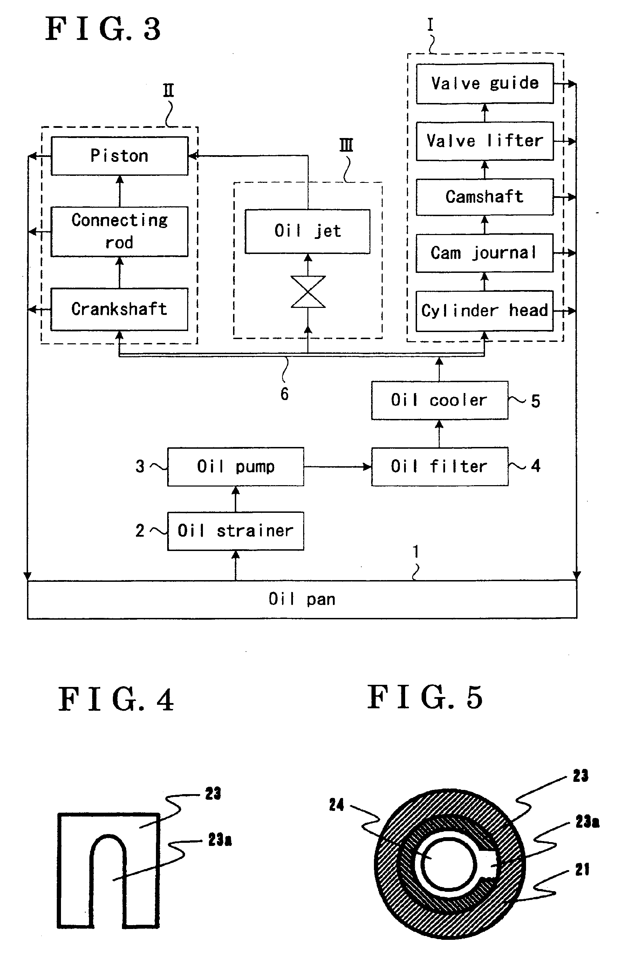

As illustrated in Fig. 3, engine lubricating oil (hereinafter oil) of an engine is stored in an oil pan 1, and the oil reaches an oil pump 3 through an oil strainer 2.

After the oil supplied into the oil pump 3 passes through an oil filter 4, the oil is cooled in an oil cooler 5 and discharged to a main oil passage 6.

The oil discharged to the main oil passage 6 is distributed into three systems, that is, a camshaft system I, a crankshaft system II, and a piston cooling system III. As illustrated in Fig. 3, the oil is returned to the oil pan 1 after lubricating and cooling each portion of each system.

The pressure actuated valve 11 according to the embodiment of the present invention configures a part of a piston cooling apparatus 12 provided in the piston cooling system III.

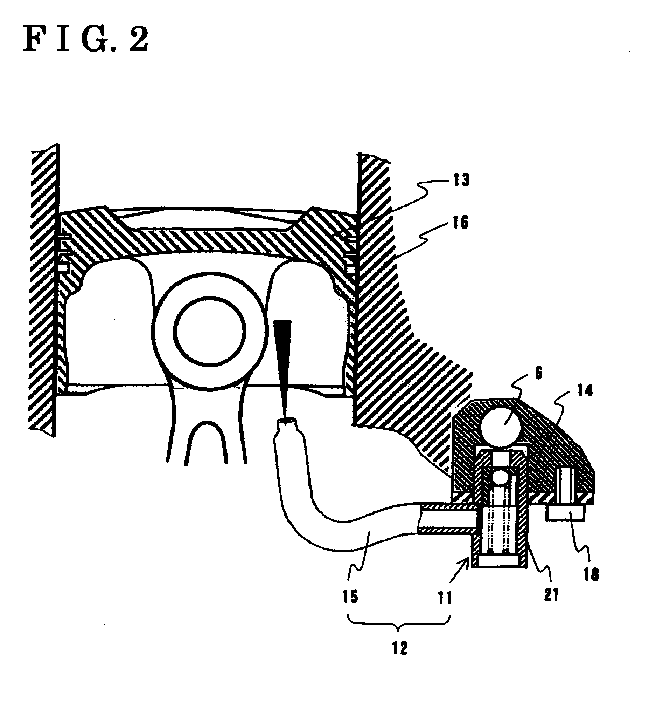

As illustrated in Fig. 2, the piston cooling apparatus 12 is attached to a cylinder block 14 by means of a bolt 18. The cylinder block 14 is positioned lower than a bottom dead center of a piston 13. The piston cooling apparatus 12 sprays the oil, which is discharged from a nozzle 15 press-fitted and supported at a valve main body 21, toward a back side of the piston 13 for cooling. Further, reference numeral 16 in Fig. 2 indicates a cylinder of the engine.

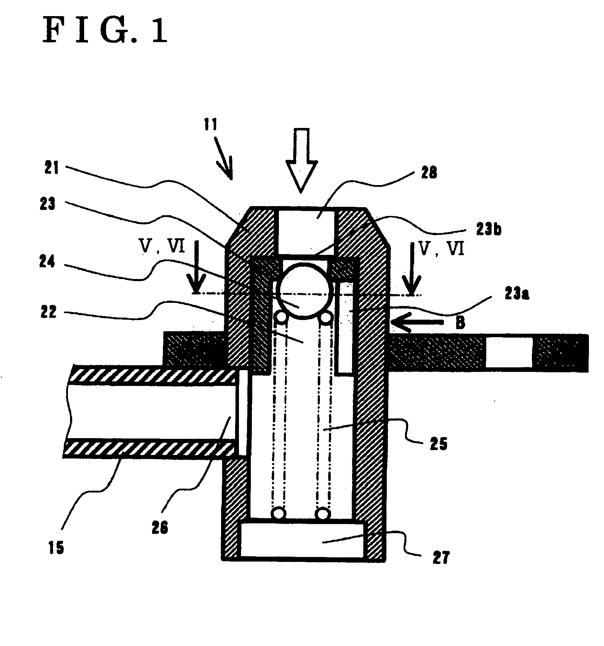

As illustrated in Fig. 1, the pressure actuated valve 11 includes the valve main body 21 having an inlet opening 28 and an outlet opening 26, a valve chamber 22 formed in the valve main body 21 between the inlet opening 28 and the outlet opening 26 and operatively connected thereto, a valve seat 23 press-fitted and fixed in the valve chamber 22, a spherical valve 24 seated on a valve seat opening 23b, which is provided at the valve seat 23, a coil spring 25 (i.e., biasing member) directly biases a back portion of the spherical valve 24, and a spring retainer 27 of the coil spring 25. Further, at the outlet opening 26, the nozzle 15 is press-fitted and supported with a predetermined posture and formed integrally with the valve main body 21.

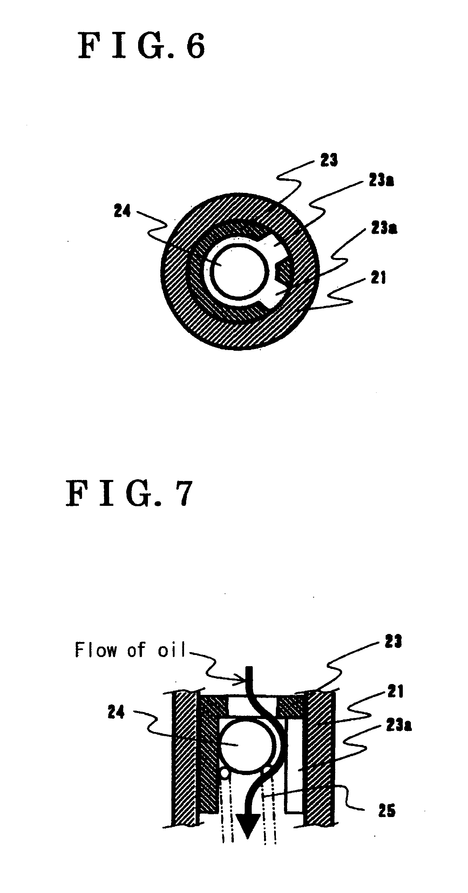

The inlet opening 28 of the pressure actuated valve 11 communicates with the main oil passage 6 illustrated in Fig. 2. In a condition where an oil pressure in the main oil passage 6 becomes larger degree than a biasing force of the coil spring 25 toward the spherical valve 24, the spherical valve 24 moves downward in response to the oil pressure and the flow of the oil as indicated by an arrow in Fig. 7 can be achieved.

A recessed portion 23a (i.e., fluid pressure biasing means) illustrated in Figs. 4-5 is axially provided on a peripheral portion of an inside wall of the valve seat 23.

When the spherical valve 24 moves downward in response to the oil pressure, the oil flows into the valve chamber 22 through a circumferential space between the downwardly moved spherical valve 24 and the valve seat 23. On this occasion, because a part where the recessed portion 23a is provided has a wider fluid passage of the oil compared to other parts, a large amount of oil flows at the part where the recessed portion 23a is provided. In consequence, the spherical valve 24 moves in a direction opposite to the recessed portion 23a and pressed toward the inside wall portion of the valve seat 23 by means of a suppress force of the large amount of the oil.

As illustrated in Fig. 7, because the spherical valve 24 is pressed toward one side of a peripheral wall of the valve seat 23 by means of the suppress force of the oil, the spherical valve 24 does not come into a floating state while opening of the valve, and an oscillation of the oil in a piping does not induced, and generation of a noise is thereby prevented.

According to the embodiment of the present invention, a direction of the biasing force of a biasing member toward the spherical valve is not necessarily be angled relative to a central line of the valve seat. Therefore, the spherical valve constantly receives the force from the direction perpendicular to the seal surface, and the spherical valve does not unevenly contact with the valve seat. Accordingly, the optimal sealability can be ensured.

According to the embodiment of the present invention, the valve seat 23 provided with the recessed portion 23a is press-fitted and formed integrally with the valve main body 21. However, the invention is not limited thereto. Alternatively, or in addition, the valve main body 21 may be directly formed with the recessed portion 23a and may be functioned as the valve seat 23.

Alternatively, or in addition, two recessed portions 23a may be provided as illustrated in Fig. 6. Further, alternatively, or in addition, plural recessed portions 23a may be provided and each recessed portion 23a may be positioned not symmetric with one another relative to an axial center of the valve seat.

Moreover, the shape of the recessed portion 23a is not limited to a U shape. Alternatively, or in addition, a circular arc depression may be provided at a part of the inside wall of the valve chamber 22 for obtaining an identical effect as described above.

According to the embodiment of the present invention, because the fluid pressure in the valve chamber biases the spherical valve in a direction perpendicular to a fluid flow direction while opening of the spherical valve, the spherical valve does not come into the floating state while opening of the valve. Therefore, the oscillation of the fluid in the piping is not induced, and generation of the noise can thereby be prevented.

According to the embodiment of the present invention, the direction of the biasing force of the biasing member toward the spherical valve is not necessarily be angled relative to the central line of the valve seat. Therefore, the spherical valve constantly receives the force from the direction perpendicular to the seal surface, and the spherical valve does not unevenly contact with the valve seat. Accordingly, the optimal sealability can be ensured.

According to the embodiment of the present invention, it is mentioned that the fluid pressure in the valve chamber biases the spherical valve in the direction perpendicular to the fluid flow direction. However the invention is not limited thereto. Even in a condition where a direction of a resultant force of a biasing force is angled relative to the fluid flow direction, the present invention is applicable as long as the resultant force of the biasing force includes an element of a direction perpendicular to the fluid flow direction.

According to the embodiment of the present invention, without increasing components, the pressure actuated valve can generate the fluid pressure for biasing the spherical valve in the direction perpendicular to the fluid flow direction with a simple structure.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A pressure actuated valve (11) comprising:
a valve main body (21);
an inlet opening (28) provided at the valve main body;
an outlet opening (26) provided at the valve main body;
a valve chamber (22) formed in the valve main body between the inlet opening and the outlet opening and operatively connected thereto;
a valve seat (23) provided at an end portion of the valve chamber at the inlet opening side;
a spherical valve (24) detachably provided in the valve chamber at the valve seat, the spherical valve being separated from the valve seat for opening the valve in response to a fluid pressure at the inlet opening;
a biasing member (25) biasing the spherical valve in a direction in which the spherical valve is pressed toward the valve seat; and
a fluid pressure biasing means (23 a) provided at the valve main body for biasing the spherical valve in a direction perpendicular to a fluid flow direction by means of the fluid pressure in the valve chamber while opening of the spherical valve.

2. The pressure actuated valve according to claim 1, wherein
the fluid pressure biasing means includes a recessed portion (23a) formed at an inside wall of the valve chamber.

3. The pressure actuated valve according to claim 2, wherein
the recessed portion includes a single groove formed at the inside wall of the valve chamber and facing the spherical valve.

4. The pressure actuated valve according to claim 2, wherein
the recessed portion includes a plurality of grooves formed at the inside wall of the valve chamber and facing the spherical valve.

5. The pressure actuated valve according to claim 4, wherein
the plurality of grooves is formed at the inside wall of the valve chamber and each groove is positioned not symmetric with one another relative to an axial center of the valve seat.
